# EUROPÄISCHE PATENTSCHRIFT

(11) **EP 1 584 730 B1**
(45) Veröffentlichungstag und Bekanntmachung des Hinweises auf die Patenterteilung: **08.09.2010**
(21) Anmeldenummer: 05002215.1
(22) Anmeldetag: 03.02.2005
(51) Int. Cl.: D06F 37/20

(54) **Dämpfer mit elastischer Führungs-/Dämpfungs-Einheit**
Damper with elastic guide- / damping unit
Amortisseur avec ensemble élastique guide/ amortisseur

(30) Priorität: 20.02.2004 DE 102004008843
(43) Veröffentlichungstag der Anmeldung: 12.10.2005
(73) Patentinhaber: SUSPA Holding GmbH, 90518 Altdorf (DE)
(72) Erfinder: Peuker, Thomas, 92260 Ammerndorf (DE); Pelczer, Andreas, 91717 Wassertrüdingen (DE)
(74) Vertreter: Rau, Albrecht

(56) Entgegenhaltungen:
- WO-A-98/26194
- DE-A1- 10 046 712
- DE-A1- 19 615 010
- DE-C1- 19 734 375

## Beschreibung

Die Erfindung betrifft einen Dämpfer mit einer elastischen Führungs-/Dämpfungs-Einheit, insbesondere für Waschmaschinen mit Schleudergang.

Dämpfer der gattungsgemäßen Art sind beispielsweise aus der DE 196 15 010 A1 bekannt. Aufgrund der kostengünstigen Herstellung derartiger Dämpfer weisen diese ein unerwünschtes Spiel zwischen ihrem Stößel und ihrem Gehäuse auf. Beim Betrieb einer Waschmaschine mit derartigen Dämpfern führt dies dazu, dass es zu einer unerwünschten Geräuschentwicklung durch das Anschlagen des Stößels an das Gehäuse kommt. Darüber hinaus wird die Lebensdauer derartiger Dämpfer in Folge eines erhöhten Verschleißes zwischen dem Stößel und dem Gehäuse verringert.

Hiervon ausgehend liegt der Erfindung die Aufgabe zugrunde, einen Dämpfer der eingangs genannten Art derart weiterzubilden, dass trotz kostengünstiger Herstellung eine geräusch- und verschleißarme Führung des Stößels in dem Gehäuse gewährleistet wird.

Diese Aufgabe wird durch die Merkmale des Anspruchs 1 gelöst. Der Kern der Erfindung besteht darin, den Dämpfer mit einer Führungs-/Dämpfungs-Einheit zu versehen, die Auslenkungen des Stößels in radialer Richtung dämpft und den Stößel im Gehäuse zentriert.

Weitere vorteilhafte Ausgestaltungen der Erfindung ergeben sich aus den Unteransprüchen.

Zusätzliche Merkmale und Vorteile der Erfindung ergeben sich aus der nachfolgenden Beschreibung von fünf Ausführungsbeispielen der Erfindung anhand der Zeichnung. Es zeigen:
- Fig. 1: eine Trommelwaschmaschine in schematischer Darstellung in Frontansicht mit Dämpfern nach einem ersten Ausführungsbeispiel,
- Fig. 2: einen Längsschnitt durch einen Dämpfer nach Fig. 1,
- Fig. 3: eine perspektivische Darstellung einer Führungs/Dämpfungs-Einheit des Dämpfers nach Fig. 2,
- Fig. 4: eine Draufsicht auf die Führungs-/Dämpfungs-Einheit nach Fig. 3,
- Fig. 5: einen Längsschnitt durch einen Dämpfer nach einem zweiten Ausführungsbeispiel,
- Fig. 6: eine perspektivische Darstellung einer Führungs/Dämpfungs-Einheit des Dämpfers nach Fig. 5,
- Fig. 7: eine Draufsicht auf die Führungs-/Dämpfungs-Einheit nach Fig. 6,
- Fig. 8: eine Draufsicht auf eine Führungs-/Dämpfungs-Einheit nach einem dritten Ausführungsbeispiel.
- Fig. 9: eine perspektivische Darstellung der Führungs-/Dämpfungs-Einheit gemäß Fig. 8,
- Fig. 10: eine Draufsicht auf eine Führungs-/Dämpfungs-Einheit gemäß einem vierten Ausführungsbeispiel,
- Fig. 11: eine perspektivische Darstellung der Führungs-/Dämpfungs-Einheit gemäß Fig. 10,
- Fig. 12: eine perspektivische Darstellung einer Führungs/Dämpfungs-Einheit gemäß einem fünften Ausführungsbeispiel, und
- Fig. 13: eine Draufsicht auf die Führungs-/Dämpfungs-Einheit gemäß Fig. 12.

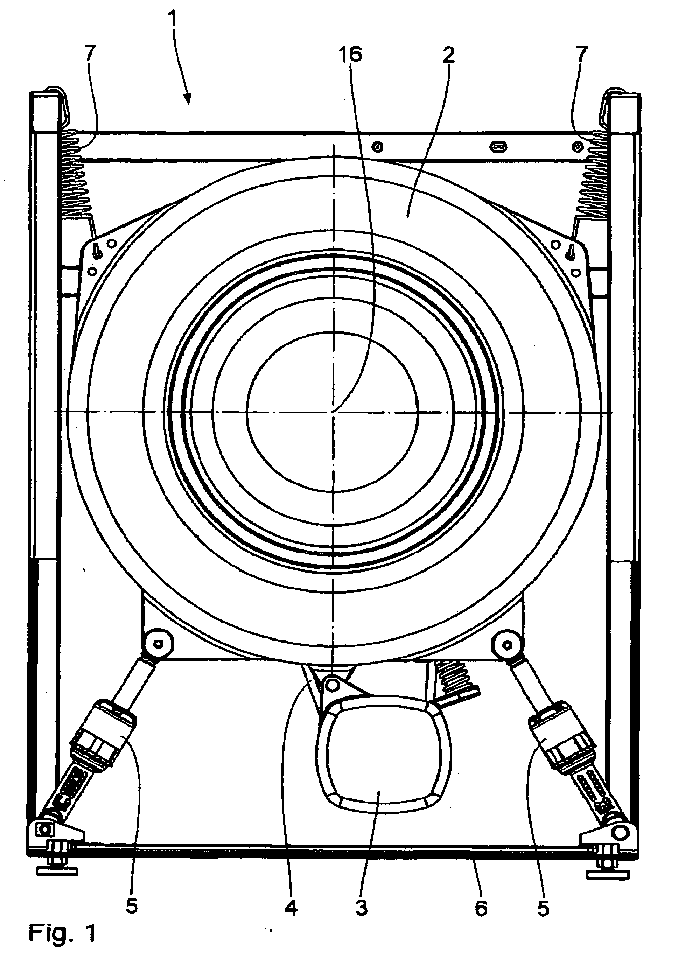

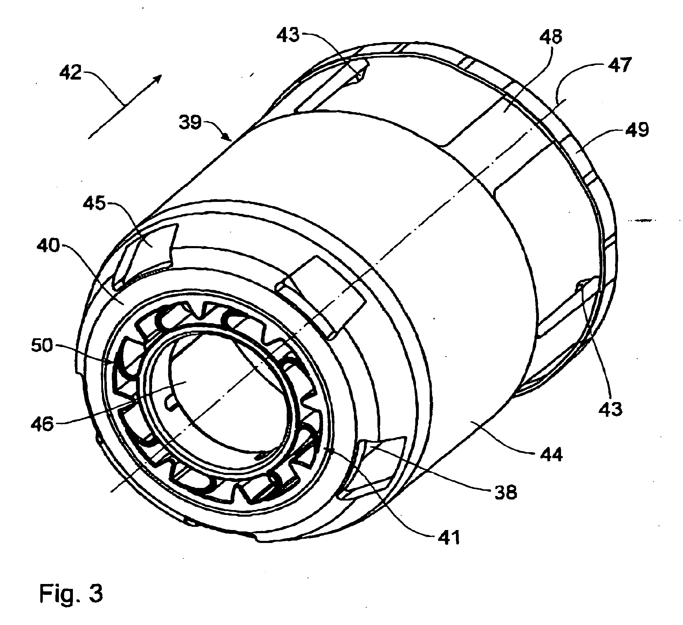

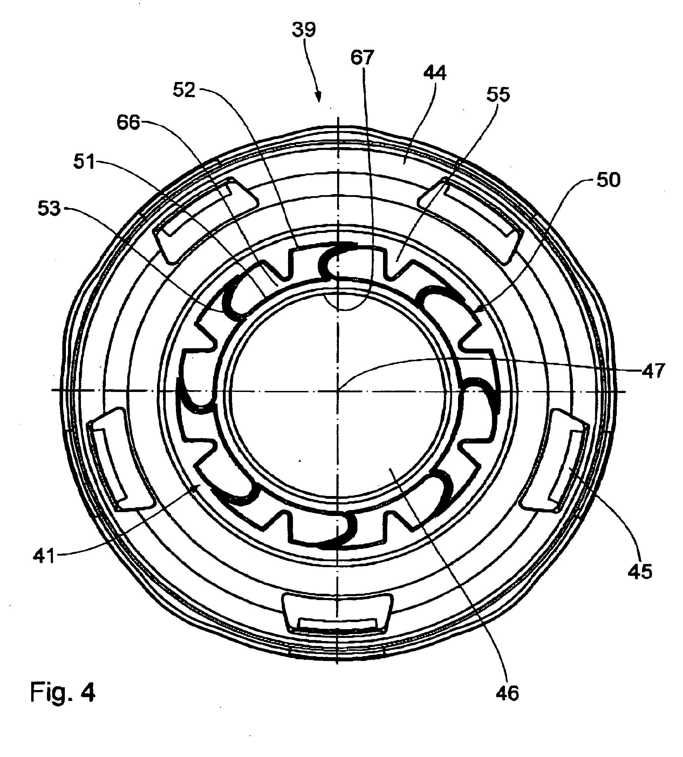

Im Folgenden wird unter Bezugnahme auf die Fig. 1 bis 4 ein Dämpfer mit einer Führungs-/Dämpfungs-Einheit entsprechend einem ersten Ausführungsbeispiel genauer beschrieben. Eine Trommelwaschmaschine 1 weist ein schwingungsfähiges Wasch-Aggregat 2 mit einem Antriebs-Motor 3 auf, der eine nicht im Einzelnen dargestellte Wasch-Trommel über einen Riemen-Trieb 4 antreibt. Das schwingungsfähige Wasch-Aggregat 2 ist über zwei nachfolgend genauer beschriebene Dämpfer 5 gegenüber einem auf dem Boden stehenden, einen Grundrahmen bildenden Maschinen-Gestell 6 abgestützt. Zusätzlich ist das Wasch-Aggregat 2 mittels Schrauben-Zugfedern 7 am Maschinen-Gestell 6 schwingungsfähig aufgehängt. Das Wasch-Aggregat 2 bildet somit zusammen mit den Dämpfern 5 und den Schrauben-Zugfedern 7 ein im Maschinen-Gestell 6 schwingungsfähig gelagertes Feder-Dämpfer-System zur Bedämpfung von Unwuchten bei Schleudervorgängen der Wasch-Trommel.

Jeder Dämpfer 5 weist ein im Wesentlichen rohrförmiges Gehäuse 8 mit einer Gehäuse-Mittel-Längs-Achse 9 auf. Unter rohrförmigen Gehäusen werden sowohl Gehäuse mit rundem als auch unrundem, insbesondere recheckigem Querschnitt verstanden. Das rohrförmige Gehäuse 8 ist an seinem freien Gehäuse-Ende 10 durch einen Boden 11 verschlossen. An der Außenseite des Bodens 11 ist ein erstes Befestigungselement 12 angebracht, welches ein erstes Lager 13 und eine innerhalb des Lagers 13 befestigte Lagerbuchse 14 umfasst. Der Dämpfer 5 ist mittels des ersten Befestigungs-Elements 12 an dem Maschinen-Gestell 6 derart angebracht, dass der Dämpfer 5 um eine Schwenkachse 15, die parallel zur Trommel-Dreh-Achse 16 verläuft, relativ zum Wasch-Aggregat 2 schwenkbar gelagert ist.

Der Dämpfer 5 weist weiterhin einen Stößel 17 mit einer Stößel-Mittel-Längs-Achse 18 auf, der an seinem freien Stößel-Ende 19 ein zweites Befestigungs-Element 20 mit einem zweiten Lager 21 aufweist. Das zweite Befestigungs-Element 20 ist in das freie Stößel-Ende 19 des rohrförmigen Stößels 17 eingesteckt und formschlüssig befestigt, so dass das zweite Befestigungs-Element 20 das freie Stößel-Ende 19 verschließt. Der Dämpfer 5 ist über das zweite Befestigungs-Element 20 an dem Wasch-Aggregat 2 derart angebracht, dass der Dämpfer 5 um eine zweite Schwenkachse 22, die ebenfalls parallel zur Trommel-Dreh-Achse 16 verläuft, drehbar gelagert ist.

Der Stößel 17 ist mit seinem gehäuseinnenseitigen Stößel-Ende 23 in das stößelseitige Gehäuse-Ende 24 eingeführt. Bei idealer Führung des Stößels 17 in dem Gehäuse 8 fallen die Gehäuse-Mittel-Längs-Achse 9 und die Stößel-Mittel-Längs-Achse 18 zusammen. Durch eine Reibungs-Dämpfungs-Einheit 26 wird die Bewegung des in dem Gehäuse 8 verschiebbar angebrachten Stößels 17 in Richtung der Mittel-Längs-Achsen 9, 18 gedämpft. Die Reibungs-Dämpfungs-Einheit 26 ist innerhalb eines Gehäuse-Bechers 27 angeordnet. Der Gehäuse-Becher 27 weist einen Becher-Boden 28 auf, der von dem stößelseitigen Gehäuse-Ende 24 durchstoßen und einstückig mit dem Gehäuse 8 ausgebildet ist. Das stößelseitige Gehäuse-Ende 24 reicht dabei circa bis zur Mitte des Gehäuse-Bechers 27.

Die Reibungs-Dämpfungs-Einheit 26 umfasst einen ringförmigen Reibungs-Dämpfungs-Belag 29, ein Anpress-Kolben-Bauteil 30, ein Befestigungs-Kolben-Bauteil 31 und eine erste Feder 32 sowie eine zweite Feder 33. Der ringförmige Reibungs-Dämpfungs-Belag 29 liegt an der Außenwand des Stößels 17 an und wird durch das Anpress-Kolben-Bauteil 30 an die Außenwand des Stößels 17 gepresst sowie in Richtung des freien Stößel-Endes 19 gehalten. In Richtung des gehäuseinnenseitigen Stößel-Endes 23 wird der Reibungs-Dämpfungs-Belag 29 durch das Befestigungs-Kolben-Bauteil 31gehalten. Das Befestigungs-Kolben-Bauteil 31 weist an seinem der Innenwand des Gehäuse-Bechers 27 zugewandtem Ende in Richtung der Mittel-Längs-Achsen 9, 18 einen ringförmigen RastVorsprung 34 auf, der mit dem dem gehäuseinnenseitigen Stößel-Ende 23 zugewandtem Ende des Anpress-Kolben-Bauteils 30 eine formschlüssige Hinterschneidung bildet und das Befestigungs-Kolben-Bauteil 31 mit dem Anpress-Kolben-Bauteil 30 fixiert. Die erste Feder 32 ist zwischen einem Befestigungs-Kolben-Anschlag 35 des Befestigungs-Kolben-Bauteits 31 und einem ringförmigen Becher-Anschlag 36 an der Innenwand des Gehäuse-Bechers 27 nahe dem Becher-Boden 28 vorgespannt. Im Gegensatz dazu ist die zweite Feder 33 zwischen einem Anpress-Kolben-Anschlag 37 des Anpress-Kolben-Bauteils 30 und einem Verschluss-Kappen-Anschlag 38 einer Verschluss-Kappe 39 vorgespannt.

Die Verschluss-Kappe 39 besitzt ebenfalls die Form eines Bechers und weist an ihrem Verschluss-Kappen-Boden 40 eine Führungs-/Dämpfungs-Einheit 41 auf, durch die das freie Stößel-Ende 19 geführt ist und die zur Dämpfung einer Auslenkung des Stößels 17 quer zur Gehäuse-Mittel-Längs-Achse 9 sowie zur Zentrierung des Stößels 17 dient. Die Verschluss-Kappe 39 weist einen größeren Durchmesser als der Gehäuse-Becher 27 auf und ist in Stößel-Einschub-Richtung 42 über den Gehäuse-Becher 27 geführt und mit diesem befestigt. Die Befestigung erfolgt mittels Rast-Nasen 43, die mit der Außenwand des Gehäuse-Bechers 27 Hinterschneidungen bilden.

Im Folgenden wird die Verschluss-Kappe 39 mit der Führungs-/Dämpfungs-Einheit 41 genauer beschrieben. Die Verschluss-Kappe 39 weist einen Kappen-Grundkörper 44 auf, der sich in Richtung des Verschluss-Kappen-Bodens 40 verjüngt und gleichmäßig über den Umfang verteilte Belüftungsöffnungen 45 umfasst. Im Verschluss-Kappen-Boden 40 ist die Führungs-/Dämpfungs-Einheit 41 angeordnet, die einstückig mit dem Kappen-Grundkörper 44 ausgebildet ist und eine Stößel-Einschub-Öffnung 46 aufweist. Von dem unverjüngten Ende des Kappen-Grundkörpers 44 erstrecken sich in Richtung einer Kappen-Mittel-Längs-Achse 47, die identisch mit der Gehäuse-Mittel-Längs-Achse 9 ist, gleichmäßig über den Umfang verteilte Befestigungsstege 48, die mit ihren freien Enden mit einem Befestigungsring 49 verbunden sind und an ihrer Innenwand nahe ihrer freien Enden die Rast-Nasen 43 aufweisen.

Die Führungs-/Dämpfungs-Einheit 41 besteht aus mehreren ringförmig angeordneten Dämpfungs-Elementen 50, die einstückig mit der Kappe 39 ausgebildet sind. Die Einheit 41 ist einteilig aus Kunststoff, insbesondere POM oder Polyamid gespritzt. Die Dämpfungs-Elemente 50 sind bezüglich der Kappen-Mittel-Längs-Achse 47 gleichförmig über den Umfang verteilt angeordnet, wobei vorzugsweise jeweils zwei der Dämpfungs-Elemente 50 bezüglich der Kappen-Mittel-Längs-Achse 47 diametral gegenüberliegend angeordnet sind. Jedes Dämpfungs-Element 50 weist ein U-förmiges Profil mit einem inneren Stegabschnitt 51 und einen im Vergleich zum inneren Stegabschnitt 51 längeren äußeren Stegabschnitt 52 auf, wobei der äußere Stegabschnitt 52 entsprechend einem Außenradius und der innere Stegabschnitt 51 entsprechend einem Innenradius bezüglich der Kappen-Mittel-Längs-Achse 47 gekrümmt ist und der Außenradius größer dem Innenradius ist. Der innere Stegabschnitt 51 und der äußere Stegabschnitt 52 sind durch einen bogenförmigen Verbindungs-Stegabschnitt 53 miteinander verbunden und umschließen gemeinsam eine nur in axialer Richtung offene Kammer 66. Der äußere Stegabschnitt 52 weist zusätzlich einen radial nach innen vorspringenden Anschlag 55 in Form eines Keils auf, der die Bewegbarkeit des inneren Stegsabschnitts 51 in radialer Richtung nach außen begrenzt. Es ist auch möglich, die radiale Bewegung der Stegabschnitte ohne einen Anschlag zu begrenzen. Hierfür muss die Festigkeit der Stegabschnitte sowie deren Geometrie geeignet gewählt werden. Die Führungs-/Dämpfungs-Einheit 41 ist bezüglich der Kappen-Mittel-Längs-Achse 47 rotationssymmetrisch mit einem Winkel von 360° geteilt durch die Anzahl der Dämpfungs-Elemente 50. Die Federcharakteristik der Dämpfungs-Elemente 50 ist über deren Geometrie einstellbar. Durch die einstückige Ausbildung der Dämpfungs-Elemente 50 bilden deren innere Stegabschnitte 51 einen geschlossenen Innenring 67 und deren äußeren Stegabschnitte 52 einen Außenring, wobei beide Ringe durch die Verbindungs-Stegabschnitte 53 miteinander verbunden sind. Der Stößel 17 liegt an dem Ring 67 gleitend mit einem Spiel an.

Im Folgenden wird die Funktionsweise des Dämpfers 5 mit der Führungs-/Dämpfungs-Einheit 41 genauer beschrieben. Beim Betrieb der Trommelwaschmaschine 1 wird der Dämpfer 5 in Folge von Unwuchten der Wasch-Trommel des Wasch-Aggregats 2 in Richtung seiner Mittel-Längs-Achsen 9, 18, 47 sowie quer zu diesen mit Kräften beaufschlagt. Bei der nachfolgenden Beschreibung wird von einer sprungförmigen Kraft-Anregung auf den Stößel 17 in Stößel-Einschub-Richtung 42 ausgegangen. Dabei werden die zwei Fälle unterschieden, dass die Kraft-Anregung auf den Stößel 17 einerseits exakt in Richtung der Gehäuse-Mittel-Längs-Achse 9 und andererseits nicht exakt zur Gehäuse-Mittel-Längs-Achse 9, das heißt mit einer Quer-Kraft-Komponente erfolgt.

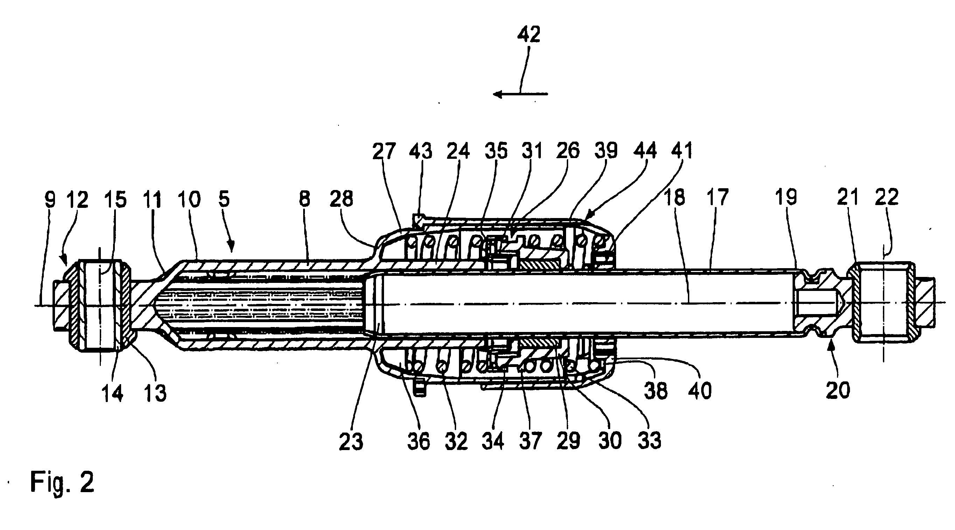

Ausgehend von der in Fig. 2 dargestellten Ruhestellung des Dämpfers 5 bewegt sich der Stößel 17 im ersten Fall der Beaufschlagung des Stößels 17 mit einer Kraft exakt in Richtung der Gehäuse-Mittel-Längs-Achse 9 in die Stößel-Einschub-Richtung 42. Die Stößel-Mittel-Längs-Achse 18 bleibt beim Einschub-Vorgang identisch mit der Gehäuse-Mittel-Längs-Achse 9, da keine Quer-Kraft-Komponente vorhanden ist. Infolge der Reibung zwischen dem Reibungs-Dämpfungs-Belag 29 und der Außenwand des Stößels 17 wird der Reibungs-Dämpfungs-Belag 29 zusammen mit dem Anpress-Kolben-Bauteil 30 und dem Befestigungs-Kolben-Bauteil 31 bei der Einschub-Bewegung des Stößels 17 in Stößel-Einschub-Richtung 42 mitgenommen. Bei dieser Einschub-Bewegung schiebt sich das Befestigungs-Kolben-Bauteil 31 über das stößelseitige Gehäuse-Ende 24 und spannt die erste Feder 32. Wird die Feder-Kraft der zunehmend gespannten ersten Feder 32 größer als die Reibungs-Kraft zwischen dem Reibungs-Dämpfungs-Belag 29 und dem Stößel 17, kommt es zu einer Bewegungs-Umkehr des Reibungs-Dämpfungs-Belags 29 zusammen mit dem Anpress-Kolben-Bauteil 30 und dem Befestigungs-Kolben-Bauteil 31, so dass sich die erste Feder 32 wieder teilweise entspannt. Der Reibungs-Dämpfungs-Belag 29 bewegt sich nun entgegen der Stößel-Einschub-Richtung 42 und bremst in Folge der Reibungs-Kraft die Bewegung des Stößels 17 in Stößel-Einschub-Richtung 42 ab, bis es zu einer Bewegungs-Umkehr des Stößels 17 kommt. Mit fortschreitender Bewegung des Stößels 17 sowie des Reibungs-Dämpfungs-Belags 29 entgegen der Stößel-Einschub-Richtung 42 wird die erste Feder 32 zunehmend entspannt, während die zweite Feder 33 zunehmend gespannt wird. Wird nun die Feder-Kraft der zweiten Feder 33 größer als die Reibungs-Kraft zwischen dem Reibungs-Dämpfungs-Belag 29 und dem Stößel 17, kommt es erneut zu einer Bewegungs-Umkehr des Reibungs-Dämpfungs-Belags 29 zusammen mit dem Anpress-Kolben-Bauteil 30 und dem Befestigungs-Kolben-Bauteil 31, wobei sich die zweite Feder 33 wieder entspannt. In Folge der Reibungs-Kraft zwischen dem Reibungs-Dämpfungs-Belag 29 und dem Stößel 17 wird die Bewegung des Stößels 17 entgegen der Stößel-Einschub-Richtung 42 erneut gebremst, bis es auch zu einer Bewegungs-Umkehr des Stößels 17 kommt.

Dieser Bewegungs-Vorgang wiederholt sich mehrmals. Der Stößel 17 führt somit innerhalb des Gehäuses 8 eine gedämpfte Schwingung aus. Die Führungs-/Dämpfungs-Einheit 41 hat bei einer Kraft-Anregung exakt in Richtung der Gehäuse-Mittel-Längs-Achse 9 lediglich die Funktion einer zusätzlichen Führung des Stößels 17. Die Dämpfungs-Elemente 50 sind in diesem Fall nicht aktiv.

Für den zweiten Fall einer Kraft-Anregung, die nicht exakt in Richtung der Gehäuse-Mittel-Längs-Achse 9 erfolgt, kann die Kraft-Anregung in eine Komponente in Richtung der Gehäuse-Mittel-Längs-Achse 9 und in eine weitere Komponente quer zur Gehäuse-Mittel-Längs-Achse 9 aufgeteilt werden. Für die Kraft-Komponente in Richtung der Gehäuse-Mittel-Längs-Achse 9 ist die Funktionsweise des Dämpfers 5 wie für den ersten Fall beschrieben. Die Kraft-Komponente quer zur Gehäuse-Mittel-Längs-Achse 9 führt zu einer Auslenkung des freien Stößel-Endes 19 quer zur Gehäuse-Mittel-Längs-Achse 9, so dass die Stößel-Mittel-Längs-Achse 18 nicht mehr mit der Gehäuse-Mittel-Längs-Achse 9 zusammenfällt. Die Auslenkung des Stößels 17 quer zur Gehäuse-Mittel-Längs-Achse 9 wird durch die Führungs-/Dämpfungs-Einheit 41 gedämpft, so dass eine Zentrierung des Stößels 17 in der Art erfolgt, dass die Stößel-Mittel-Längs-Achse 18 wieder mit der Gehäuse-Mittel-Längs-Achse 9 zusammenfällt.

Bei der folgenden Beschreibung der Funktionsweise der Führungs-/Dämpfungs-Einheit 41 wird angenommen, dass die Quer-Kraft-Komponente in einer Ebene wirkt, die durch die Kappen-Mittel-Längs-Achse 47 und zwei gegenüberliegende Anschläge 55 zweier diametral gegenüberliegend angeordneter Dämpfungs-Elemente 50 führt. In Folge der Quer-Kraft-Komponente wird der innere Stegabschnitt 51 des Dämpfungs-Elements 50 radial nach außen bewegt. Dabei wird der Verbindungs-Stegabschnitt 53 derart gespannt, dass eine Feder-Kraft in Richtung der Kappen-Mittel-Längs-Achse 47 entsteht. Diese Feder-Kraft bremst die radiale Auslenkung des Stößels 17 und führt zu einer Bewegungs-Umkehr des Stößels 17 in Richtung der Kappen-Mittel-Längs-Achse 47. Bei dem beschriebenen Bewegungs-Vorgang wird der innere Stegabschnitt 51 des diametral gegenüberliegenden Dämpfungs-Elements 50 zunächst in Richtung der Kappen-Mittel-Längs-Achse 47 bewegt, wobei der Verbindungs-Stegabschnitt 53 ebenfalls eine Feder-Kraft aufbaut, die jedoch radial nach außen wirkt. Dies führt ebenfalls dazu, dass die Bewegung des Stößels 17 in Quer-Richtung gebremst und gedämpft wird. Die für die Dämpfung verantwortlichen Reibungs-Verluste entstehen in erster Linie in der Material-Struktur der Dämpfungs-Elemente 50 in Folge einer verlustbehafteten elastischen Verformung. Wichtig ist der Abbau von Energie von Bewegungen in radialer Richtung. Durch die Führungs-/Dämpfungs-Einheit 41 wird somit eine Auslenkung des Stößels 17 quer zur Gehäuse-Mittel-Längs-Achse 9 gedämpft und der Stößel 17 nach Verschwinden der Quer-Kraft-Komponente gleichzeitig zentriert. Bei Quer-Kraft-Komponenten mit einer großen Amplitude wird die Auslenkung des Stößels 17 durch die keilförmig hervorspringenden Anschläge 55 begrenzt. Der Dämpfer 5 mit der Führungs-/Dämpfungs-Einheit 41 führt somit zu einer deutlich geringeren Geräuschentwicklung des Dämpfers 5 bei Betrieb der Trommelwaschmaschine 1 und zu einem deutlich verringerten Verschleiß des Dämpfers 5 in Folge der ständigen Zentrierung des Stößels 17.

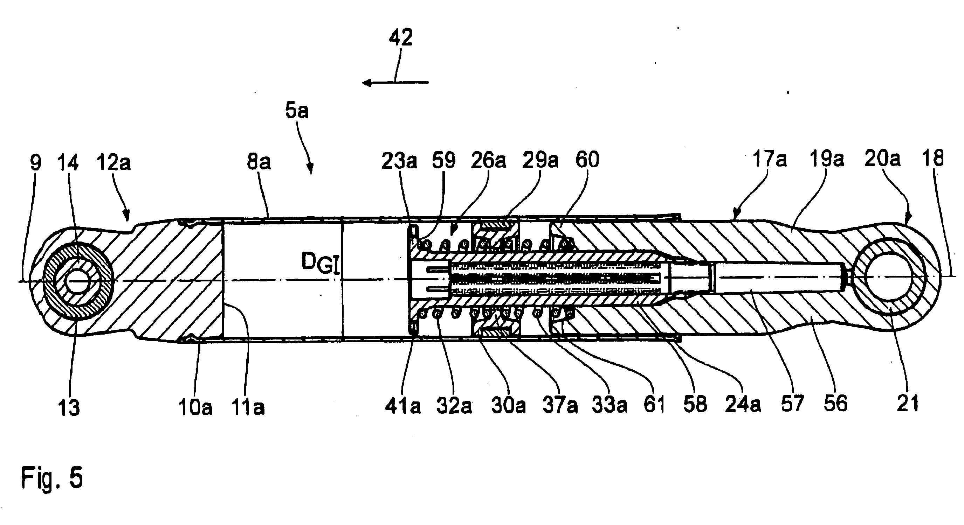

Im Folgenden wird unter Bezugnahme auf die Fig. 5 bis 7 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a. Der zentrale Unterschied gegenüber dem ersten Ausführungsbeispiel besteht darin, dass der Reibungs-Dämpfungs-Belag 29a an der Innenwand des Gehäuses 8a reibt. Zu diesem Zweck ist der Stößel 17a zweiteilig ausgebildet, wobei das erste Stößel-Bauteil 56 einstückig mit dem zweiten Befestigungs-Element 20a geformt ist und ein konzentrisch zur Stößel-Mittel-Längs-Achse 18 angeordnetes Sackloch 57 unterschiedliche Durchmesser zur form- und reibschlüssigen Verbindung mit einem zweiten Stößel-Bauteil 58 aufweist. Auf den genauen Aufbau des Sacklochs 57 soll im Einzelnen nicht weiter eingegangen werden. Das zweite Stößel-Bauteil 58 ist im Wesentlichen rohrförmig aufgebaut und besitzt im Vergleich zum ersten Stößel-Bauteil 56 einen kleineren Durchmesser. Am gehäuseinnenseitigen Stößel-Ende 23a des zweiten Stößel-Bauteils 58 ist ein ringförmiger Stößel-Anschlag 59 mit vergrößertem Durchmesser angeordnet, der die Führungs-/Dämpfungs-Einheit 41 a trägt. Das erste Stößel-Bauteil 56 weist an seinem Stößel-Bauteil-Ende 60 einen keilförmig vertieften ringförmigen Stößel-Bauteil-Anschlag 61 auf. Zwischen dem Stößel-Bauteil- Ende 60 und dem gehäuseinnenseitigen Stößel-Ende 23a ist das Anpress-Kolben-Bauteil 30a mit dem Reibungs-Dämpfungs-Belag 29a angeordnet. Das Anpress-Kolben-Bauteil 30a ist als U-förmiger Ring ausgebildet, der den Reibungs-Dämpfungs-Belag 29a beidseitig hält. An der der Gehäuse-Mittel-Längs-Achse 9 zugewandten Wand des Anpress-Kolben-Bauteils 30a ist der Anpress-Kolben-Anschlag 37a radial hervorspringend ausgebildet. Die erste Feder 32a ist zwischen dem Stößel-Anschlag 59 und der dem gehäuseinnenseitigen Stößel-Ende 23a zugewandten Wand des Anpress-Kolben-Anschlags 37a vorgespannt. Die zweite Feder 33a ist dagegen zwischen dem Stößel-Bauteil-Anschlag 61 und der dem Stößel-Bauteil-Ende 60 zugewandten Wand des Anpress-Kolben-Anschlags 37a vorgespannt. Das erste Befestigungs-Element 12a ist zweiteilig mit dem Gehäuse 8a ausgebildet und mit dem freien Gehäuse-Ende 10a formschlüssig verbunden.

Das erste Befestigungs-Element 12a bildet somit den Boden 11a des Gehäuses 8a. Im Folgenden wird das zweite Stößel-Bauteil 58 mit der Führungs-/Dämpfungs-Einheit 41 a genauer beschrieben. Das zweite Stößel-Bauteil 58 weist einen rohrförmigen Stößel-Grundkörper 62 auf, dessen Grundkörper-Ende 63 sich verjüngt und an dem zwei sich in Richtung der Stößel-Mittel-Längs-Achse 18 erstreckende Befestigungs-Vorsprünge 64 mit jeweils einer Befestigungs-Nase 65 angeordnet sind. Der scheibenförmige Stößel-Anschlag 59 ist einteilig mit dem Stößel-Grundkörper 62 und der Führung-/Dämpfungs-Einheit 41a ausgebildet. Im Inneren des Stößel-Grundkörpers 62 sind diverse Versteifungs-Elemente angebracht, die im Einzelnen nicht weiter beschrieben werden.

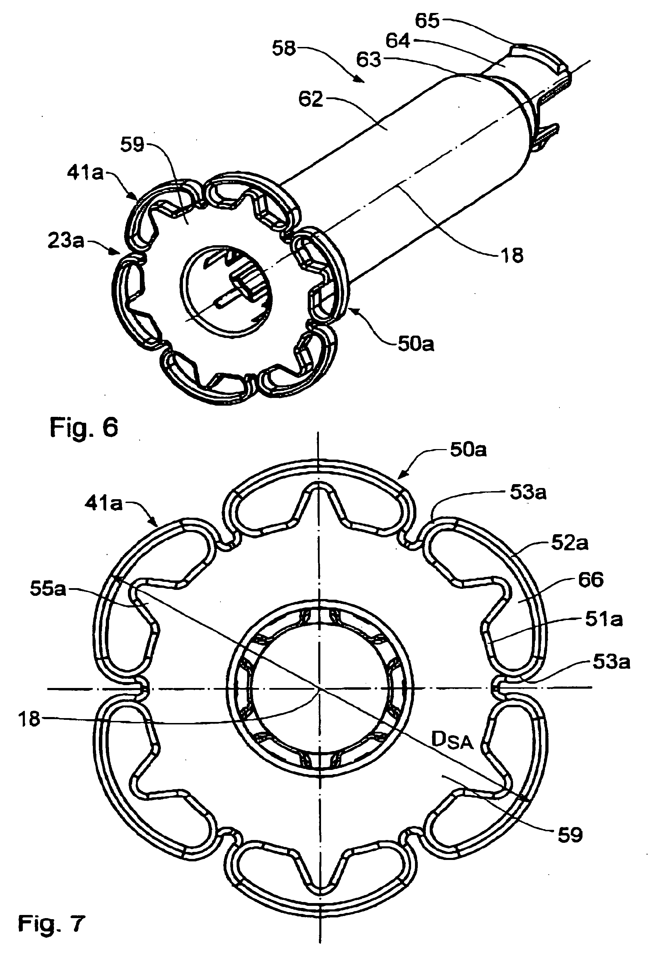

Die Führungs-/Dämpfungs-Einheit 41 a besteht aus sechs ringförmig angeordneten Dämpfungs-Elementen 50a, die diametral gegenüberliegend und gleichförmig verteilt bezüglich der Stößel-Mittel-Längs-Achse 18 beabstandet angeordnet sind. Jedes Dämpfungs-Element 50a weist einen inneren Stegabschnitt 51a und einen äußeren Stegabschnitt 52a auf, wobei der äußere Stegabschnitt 52a mit einem Außenradius und der innere Stegabschnitt 51a mit einem Innenradius gekrümmt ist und der Innenradius größer dem Außenradius ist. Der innere Stegabschnitt 51a weist mittig einen Anschlag 55a auf, der radial vorspringend in Richtung des äußeren Stegabschnitts 52a ausgebildet ist. Jedes Dämpfungs-Element 50a ist bezüglich einer Ebene, die sich durch die Stößel-Mittel-Längs-Achse 18 und die Spitze des zum Dämpfungs-Elements 50a gehörenden Anschlags 55a erstreckt, symmetrisch. Der äußere Stegabschnitt 52a ist mit dem inneren Stegabschnitt 51a beidseitig derart über jeweils einen Verbindungs-Stegabschnitt 53a verbunden, dass die einzelnen Stegabschnitte nahtlos ineinander übergehen. Die Abschnitte 51a, 52a und 53a umschließen jeweils eine nur in axialer Richtung offene, doppelnierenförmige Kammer 66. Der Außendurchmesser D_{SA} der Führungs-/Dämpfungs-Einheit 41a ist definiert als der maximale Abstand zweier einander gegenüberliegender äußerer Stegabschnitte 52a im entspannten, in den Fig. 6 und 7 dargestellten Zustand. Das Gehäuse 8a weist einen Innendurchmesser D_{GI} auf. Es gilt: D_{SA} < D_{GI}, das heißt es besteht immer ein Spiel zwischen den Abschnitten 52a und der Gehäuse-Innenwand.

Die Funktionsweise des Dämpfers 5a ist analog zu der des ersten Ausführungsbeispiels. Für den Fall einer Beaufschlagung des Stößels 17a mit einer sprungförmigen Kraft in Richtung der Gehäuse-Mittel-Längs-Achse 9 besteht der einzige Unterschied darin, dass der Reibungs-Dämpfungs-Belag 29a gegen die Innenwand des Gehäuses 8a reibt und die Führung der Führungs-/Dämpfungs-Einheit 41a gegenüber der Innenwand des Gehäuses 8a erfolgt. Für den zweiten Fall einer vorhandenen Quer-Kraft-Komponente wird die Auslenkung des Stößels 17a ebenfalls durch die Führungs-/Dämpfungs-Einheit 41 a gedämpft und der Stößel 17a bezüglich der Gehäuse-Mittel-Längs-Achse 9 zentriert. Wird angenommen, dass die Quer-Kraft-Komponente in der Ebene durch die Stößel-Mittel-Längs-Achse 18 und die Spitze des Anschlags 55a eines Dämpfungs-Elements 50a wirkt, so wird der äußere Stegabschnitt 52a des betreffenden Dämpfungs-Elements 50a elastisch in Richtung der Stößel-Mittel-Längs-Achse 18 bewegt, so dass eine Feder-Kraft aufgebaut wird, die der Quer-Kraft-Komponente entgegenwirkt. In Folge dessen wird die Auslenkung des Stößels 17a quer zur Stößel-Mittel-Längs-Achse 18 gebremst, bis es zu einer Bewegungs-Umkehr des Stößels 17a kommt. Der äußere Stegabschnitt 52a bewegt sich nun von der Stößel-Mittel-Längs-Achse 18 radial nach außen weg. In Folge von Reibungs-Verlusten im Material der Dämpfungs-Elemente 50a und von Reibungs-Verlusten zwischen der Führungs-/Dämpfungs-Einheit 41 a und der Innenwand des Gehäuses 8a wird der vom Stößel 17a ausgeführte Schwingungsvorgang quer zur Stößel-Mittel-Längs-Achse 18 gedämpft, so dass der Stößel 17a nach Verschwinden der Quer-Kraft-Komponente wieder zentriert zur Gehäuse-Mittel-Längs-Achse 9 angeordnet ist. Bei einer Quer-Kraft-Komponente mit einer großen Amplitude wird die Bewegung des äußeren Stegabschnitts 52a durch den Anschlag 55a begrenzt.

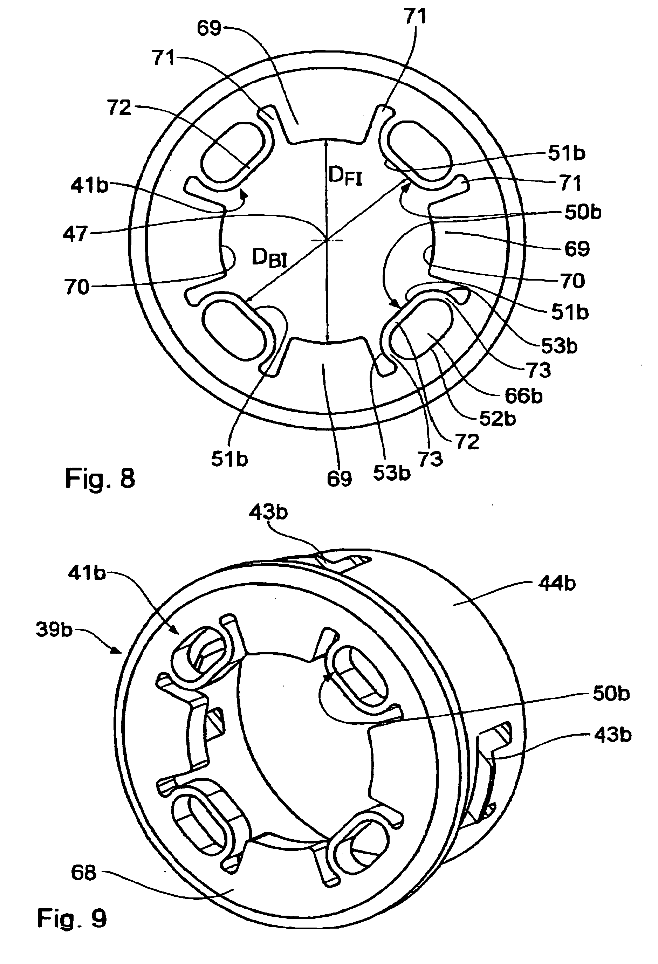

Im Folgenden wird unter Bezugnahme auf die Fig. 8 und 9 ein drittes Ausführungsbeispiel der Erfindung beschrieben. Identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten b. Der wesentliche Unterschied gegenüber dem ersten Ausführungsbeispiel besteht in der Ausgestaltung der Führungs-/Dämpfungs-Einheit 41b. Wie beim ersten Ausführungsbeispiel ist die Führungs-/Dämpfungs-Einheit 41b an der Verschluss-Kappe 39b befestigt. Im Unterschied zum ersten Ausführungsbeispiel wird die Verschluss-Kappe 39b jedoch in den Gehäuse-Becher 27 und nicht über diesen geschoben, sodass als Folge die an der Verschluss-Kappe 39b angeordneten Rast-Nasen 43b in radialer Richtung nach außen vorstehen und von innen in entsprechende Ausnehmungen im Gehäuse-Becher 27 rastend eingreifen. Die Verschluss-Kappe 39b weist vier gleichmäßig über den Umfang verteilte, von einem ringförmigen Rand 68 nach innen vorspringende Dämpfungs-Elemente 50b auf. Der innere Stegabschnitt 51b sowie die Verbindungs-Stegabschnitte 53b bilden einen bogenförmig nach innen vorstehenden, elastisch zusammendrückbaren Federarm oder Bügel. Dieser umschließt eine nur in axialer Richtung offene, im Querschnitt ovale Kammer 66b. Zwischen zwei benachbarten Dämpfungs-Elementen 50b ist ein vom Rand 68 nach innen vorspringender Führungs-Steg 69 angeordnet, dessen der Achse 47 zugewandte Innen-Flächen 70 im Querschnitt die Form eines Radius um die Achse 47 hat. Der Durchmesser im Bereich zweier einander gegenüberliegender innerer Stegabschnitte 51b wird mit D_{BI} bezeichnet. Der Durchmesser im Bereich zweier einander gegenüberliegender Führungsstege 69 wird mit D_{FI} bezeichnet. Es gilt: D_{FI} > D_{BI}, das heißt die inneren Stegabschnitte 51b stehen in Richtung auf die Achse 47 weiter vor, als die Innenflächen 70 der Führungs-Stege 69. Der Stößel 17 ist gegenüber den Abschnitten 51b mit einem Spiel versehen. Der Stößel 17 liegt somit bei einer Verkippung zunächst an den inneren Stegabschnitten 51b an. Kommt es zu einer zu stärkeren Verkippung, so wird die Führung des Stößels 17 durch die Innenflächen 70 sichergestellt. Zwischen einem Dämpfungs-Element 50b und einem Führungs-Steg 69 befindet sich jeweils eine im Wesentlichen radial verlaufende Nut 71, die den bogenförmigen Verbindungs-Stegabschnitt 53b freigibt und ihm Raum zur Deformation beim Zusammendrücken gibt.

Hinsichtlich der Funktionsweise der Führungs-/Dämpfungs-Einheit 41b wird auf die Erläuterungen zum ersten Ausführungsbeispiel verwiesen. Vorteilhaft ist, dass die Dämpfungs-Elemente 50b Deformationen besser aufnehmen können, da sie nicht, wie im ersten Ausführungsbeispiel, durch einen gemeinsamen Innenring 67 verbunden sind. Darüber hinaus schaffen die Führungs-Stege 69 bei stärkeren Verkippungen eine stabile Führung.

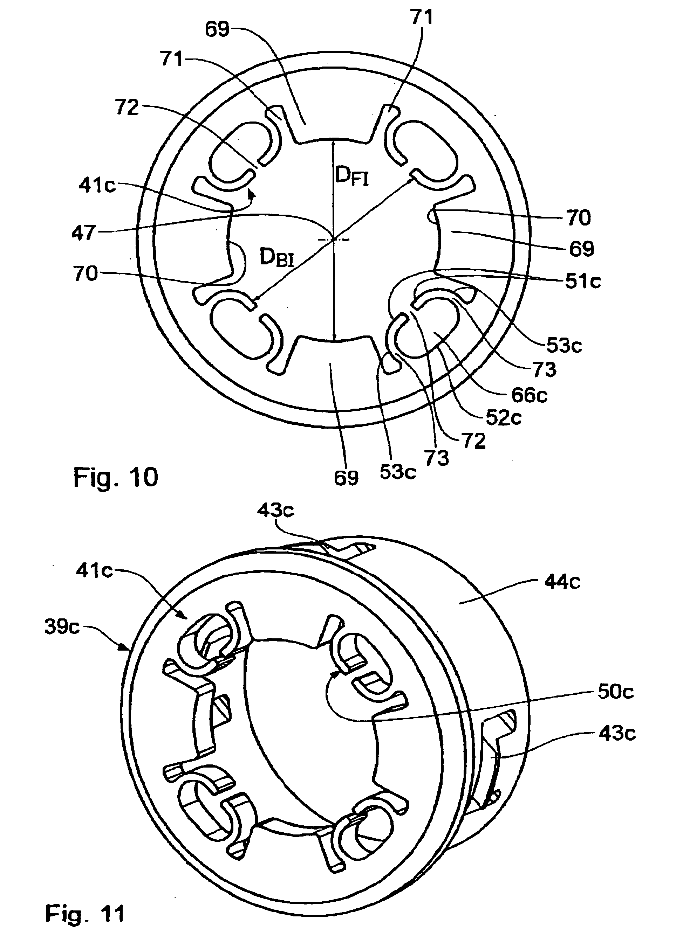

Im Folgenden wird unter Bezugnahme auf die Fig. 10 und 11 ein viertes Ausführungsbeispiel der Erfindung beschrieben. Identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten c. Die Verschluss-Kappe 39c weist bis auf eine Ausnahme den identischen Aufbau auf wie die Verschluss-Kappe 39b des dritten Ausführungsbeispiels. Der einzige Unterschied besteht darin, dass die inneren Stegabschnitte 51c in der Mitte durch einen Spalt 72 unterbrochen sind. Das Dämpfungs-Element 50c wird somit mit anderen Worten durch zwei im Querschnitt viertelkreisförmige, aufeinander zugerichtete Bögen 73 gebildet, durch deren freie Enden der Spalt 72 begrenzt wird. Ein Vorteil dieser Anordnung besteht darin, dass die zum Zusammendrücken der Bögen 73 in radialer Richtung erforderliche Kraft geringer ist. Es können somit bei gleichem Dämpfungsverhalten festere Werkstoffe, wie z. B. POM, verwendet werden, die für den Rest der Verschluss-Kappe 39c vorteilhaft sind. Ansonsten wird hinsichtlich der Funktionsweise des vierten Ausführungsbeispiels auf das dritte Ausführungsbeispiel und damit auch auf das erste Ausführungsbeispiel verwiesen.

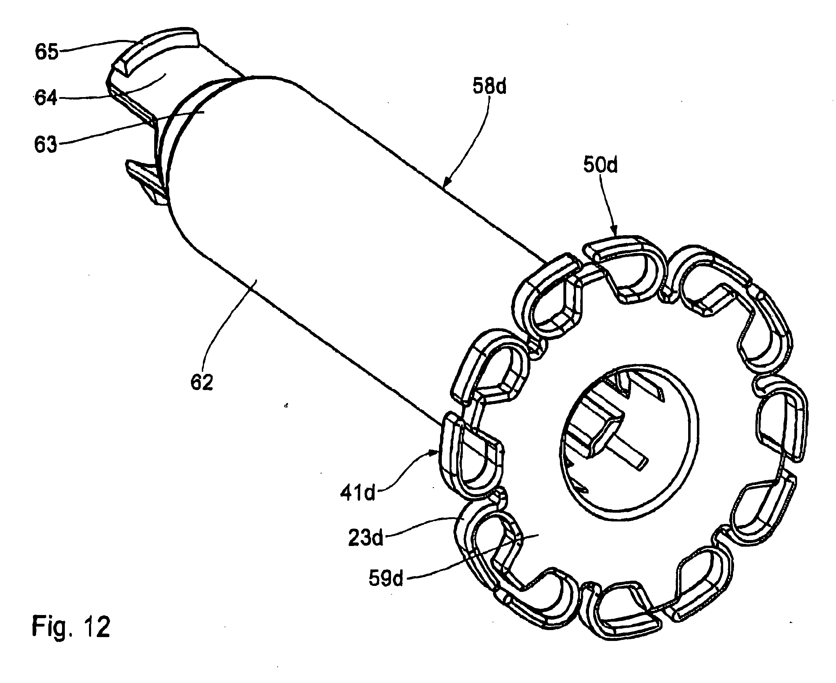

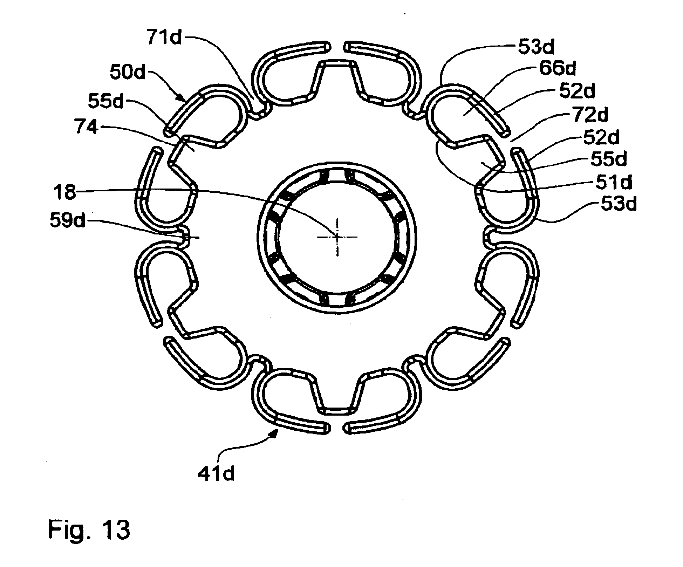

Im Folgenden wird unter Bezugnahme auf die Fig. 12 und 13 ein fünftes Ausführungsbeispiel der Erfindung beschrieben. Identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten d. Das fünfte Ausführungsbeispiel weist im Wesentlichen denselben Aufbau auf wie das zweite Ausführungsbeispiel gemäß den Fig. 5 bis 7. Der einzige Unterschied besteht darin, dass der äußere Stegabschnitt 52d mittig durch einen Spalt 72d unterbrochen ist, wodurch die beiden Teile des Stegabschnitts 52d flexibler werden und dieselben Vorteile auftreten wie bei dem vierten Ausführungsbeispiel gemäß den Fig. 10 und 11. Zwischen benachbarten Dämpfungs-Elementen 50d befindet sich, wie beim zweiten Ausführungsbeispiel jeweils eine Nut 71d, die durch benachbarte Stegabschnitte 53d begrenzt wird. Im Gegensatz zum zweiten Ausführungsbeispiel ist der Anschlag 55d abgeflacht ausgebildet, das heißt er besitzt eine Sattelfläche 74, auf der die freien Enden der Teile des Stegabschnitts 52d bei einem starken Zusammendrücken zu liegen kommen können. Ansonsten wird hinsichtlich der Funktionsweise auf die Beschreibung des zweiten Ausführungsbeispiels verwiesen.

## Patentansprüche

1. Dämpfer, insbesondere für Trommelwaschmaschinen mit Schleudergang, umfassend
a) ein eine Gehäuse-Mittel-Längs-Achse (9) aufweisendes, im Wesentlichen rohrförmiges Gehäuse (8; 8a) mit einem stößelseitigen Gehäuse-Ende (24; 24a) und einem freien Gehäuse-Ende (10; 10a),
b) einen in dem Gehäuse (8; 8a) verschiebbar geführten und aus dem stößelseitigen Gehäuse-Ende (10; 10a) herausragenden und eine Stößel-Mittel-Längs-Achse (18) aufweisenden Stößel (17; 17a) mit einem gehäuseinnenseitigen Stößel-Ende (23; 23a) und einem freien Stößel-Ende (19; 19a),
c) jeweils an dem freien Gehäuse-Ende (10; 10a) und an dem freien Stößel-Ende (19; 19a) angebrachte Befestigungs-Elemente (12, 20; 12a, 20a),
d) eine Reibungs-Dämpfungs-Einheit (26; 26a) zur Erzeugung einer vorgegebenen Reibungsdämpfung zwischen dem Gehäuse (8; 8a) und dem Stößel (17; 17a), **gekennzeichnet dadurch, daß** der Dämpfer weiters
e) eine Führungs-/Dämpfungs-Einheit (41; 41a; 41b; 41c; 41d) zur Dämpfung und Zentrierung einer Auslenkung des Stößels (17; 17a) quer zur Gehäuse-Mittel-Längs-Achse (9) umfaßt.

2. Dämpfer nach Anspruch 1, **dadurch gekennzeichnet, dass** die Führungs-/Dämpfungs-Einheit (41; 41a; 41b; 41c; 41d) derart ausgebildet ist, dass sie eine elastische Abstützung des Stößels (17; 17a) gegenüber dem Gehäuse (8; 8a) ermöglicht.

3. Dämpfer nach Anspruch 1 oder 2, **dadurch gekennzeichnet, dass** die Führungs-/Dämpfungs-Einheit (41; 41a; 41b; 41c; 41d) aus mehreren, insbesondere mindestens drei ringförmig angeordneten Dämpfungs-Elementen (50; 50a; 50b: 50c; 50d) besteht.

4. Dämpfer nach Anspruch 3, **dadurch gekennzeichnet, dass** jeweils zwei Dämpfungs-Elemente (50; 50a; 50b; 50c; 50d) bezüglich einer Mittel-Längs-Achse (9, 18) diametral gegenüberliegend angeordnet sind.

5. Dämpfer nach einem der Ansprüche 3 oder 4, **dadurch gekennzeichnet, dass** jedes Dämpfungs-Element (50; 50d) mindestens einen bogenförmigen Stegabschnitt (51, 53; 52a, 53a; 51b, 53b; 51c, 53c; 52d, 53d) aufweist, der in radialer Richtung zu einer Mittel-Längs-Achse (9, 18) elastisch bewegbar ist.

6. Dämpfer nach Anspruch 5, **dadurch gekennzeichnet, dass** die radiale Bewegbarkeit des Stegabschnitts (51, 53; 52a, 53a; 52d, 53d) durch einen Anschlag (55; 55a; 55d) begrenzt ist.

7. Dämpfer nach Anspruch 5, **dadurch gekennzeichnet, dass** mindestens ein Stegabschnitt (51; 52a; 51b) geschlossen ausgebildet ist und eine dahinterliegende Kammer (66; 66b; 66c; 66d) mit umschließt.

8. Dämpfer nach Anspruch 5, **dadurch gekennzeichnet, dass** mindestens ein Stegabschnitt (51c; 52d) zweiteilig unter Bildung eines Spalts (72; 72d) ausgebildet ist.

9. Dämpfer gemäß einem der Ansprüche 1 bis 5, **dadurch gekennzeichnet, dass** zwischen benachbarten Dämpfungs-Elementen (50b; 50c) ein Führungs-Steg (69) angeordnet ist.

10. Dämpfer nach Anspruch 1, **dadurch gekennzeichnet, dass** die Führungs-/Dämpfungs-Einheit (41a; 41d) am gehäuseinnenseitigen Stößel-Ende (23a; 23d) des Stößels (17a) angeordnet ist.

11. Dämpfer nach Anspruch 1, **dadurch gekennzeichnet, dass** die Führungs-/Dämpfungs-Einheit (41; 41b; 41c) im Bereich des stößelseitigen Gehäuse-Endes (24) angeordnet und mit dem Gehäuse (8) verbunden ist.

## Claims

1. A damper, in particular for spin-drying cylinder washing machines, comprising
a) a substantially tubular casing (8; 8a) which has a central longitudinal axis (9) and an end (24; 24a) on the side of a tappet (17; 17a) and a free end (10; 10a);
b) a tappet (17; 17a) which is displaceably guided in the casing (8; 8a) and projects from the end (10; 10a) on the side of the tappet (17; 17a), having a central longitudinal axis (18) and an end (23; 23a) inside the casing (8; 8a) and a free end (19; 19a);
c) fastening elements (12, 20; 12a, 20a) which are each mounted on the free end (10; 10a) of the casing (8; 8a) and on the free end (19; 19a) of the tappet (17; 17a);
d) a frictional damping unit (26; 26a) for producing a given frictional damping effect between the casing (8; 8a) and the tappet (17; 17a); **characterized that** the damper further comprises
e) a guiding damping unit (41; 41a; 41b; 41c; 41d) for damping and centering any deflection of the tappet (17; 17a) crosswise of the central longitudinal axis (9) of the casing (8; 8a).

2. A damper according to claim 1, **characterized in that** the guiding damping unit (41; 41a; 41b; 41c; 41d) is designed for enabling the tappet (17; 17a) to be supported flexibly towards the casing (8; 8a).

3. A damper according to claim 1 or 2, **characterized in that** the guiding damping unit (41; 41a; 41b; 41c; 41d) is composed of several, in particular at least three, damping elements (50; 50a; 50b; 50c; 50d) of annular arrangement.

4. A damper according to claim 3, **characterized in that**, related to a central longitudinal axis (9, 18), two damping elements (50; 50a; 50b; 50c; 50d) at a time face each other diametrically.

5. A damper according to one of claims 3 or 4, **characterized in that** each damping element (50; 50d) possesses at least one curved rib portion (51, 53; 52a, 53a; 51b, 53b; 51c, 53c; 52d, 53d) which is flexibly movable radially of a central longitudinal axis (9, 18).

6. A damper according to claim 5, **characterized in that** the radial mobility of the rib portion (51, 53; 52a, 53a; 52d, 53d) is defined by a stop (55; 55a; 55d).

7. A damper according to claim 5, **characterized in that** at least one rib portion (51; 52a; 51b) is closed, enclosing a chamber (66; 66b; 66c; 66d) that is located there-behind.

8. A damper according to claim 5, **characterized in that** at least one rib portion (51c; 52d) is of two-piece design, producing a gap (72, 72d).

9. A damper according to one of claims 1 to 5, **characterized in that** a guide rib (69) is disposed between two adjacent damping elements (50b; 50c).

10. A damper according to claim 1, **characterized in that** the guiding damping unit (41a; 41d) is disposed on the end (23a; 23d) of the tappet (17a) inside the casing.

11. A damper according to claim 1, **characterized in that** the guiding damping unit (41; 41b; 41c) is disposed in the vicinity of the end (24), on the side of the tappet, of the casing (8) and joined to the casing (8).

## Revendications

1. Amortisseur, destiné en particulier à des machines à laver à tambour avec fonction essorage, comprenant
a) un carter (8 ; 8a) présentant un axe longitudinal médian de carter (9), de forme sensiblement tubulaire avec une extrémité de carter côté poussoir (24 ; 24a) et une extrémité libre de carter (10 ; 10a),
b) un poussoir (17 ; 17a) monté de manière à pouvoir coulisser dans le carter (8 ; 8a), ressortant de l'extrémité de carter côté poussoir (10 ; 10a), et présentant un axe longitudinal médian de poussoir (18) avec une extrémité de poussoir vers l'intérieur du carter (23 ; 23a) et une extrémité libre de poussoir (19 ; 19a),
c) des éléments de fixation (12, 20 ; 12a, 20a) respectivement appliqués sur l'extrémité libre de carter (10 ; 10a) et l'extrémité libre du poussoir (19 ; 19a),
d) une unité d'amortissement par friction (26 ; 26a) pour la génération d'un amortissement par friction défini entre le carter (8 ; 8a) et le poussoir (17 ; 17a),
**caractérisé en ce que** l'amortisseur comprend en outre
e) une unité de guidage/d'amortissement (41 ; 41a ; 41b ; 41c ; 41d) pour l'amortissement et le centrage d'une déviation du poussoir (17 ; 17a) transversalement à l'axe longitudinal médian du carter (9).

2. Amortisseur selon la revendication 1, **caractérisé en ce que** l'unité de guidage/d'amortissement (41 ; 41a ; 41b ; 41c ; 41d) est réalisée de manière à permettre un soutien élastique du poussoir (17 ; 17a) par rapport au carter (8 ; 8a).

3. Amortisseur selon la revendication 1 ou la revendication 2, **caractérisé en ce que** l'unité de guidage/d'amortissement (41 ; 41a ; 41b ; 41c ; 41d) se compose de plusieurs, en particulier au moins de trois éléments d'amortissement (50 ; 50a ; 50b ; 50c ; 50d) disposés en anneau.

4. Amortisseur selon la revendication 3, **caractérisé en ce que** les éléments d'amortissement (50 ; 50a ; 50b ; 50c ; 50d) sont diamétralement opposés par deux par rapport à un axe longitudinal médian (9, 18).

5. Amortisseur selon l'une des revendications 3 ou 4, **caractérisé en ce que** chaque élément d'amortissement (50 ; 50d) présente au moins une partie en ailette cintrée (51, 53 ; 52a, 53a ; 51b, 53b ; 51c, 53c ; 52d, 53d), laquelle est élastiquement mobile en direction radiale vers un axe longitudinal médian (9, 18).

6. Amortisseur selon la revendication 5, **caractérisé en ce que** la mobilité radiale de la partie en ailette (51, 53 ; 52a, 53a ; 52d, 53d) est limitée par une butée (55 ; 55a ; 55d).

7. Amortisseur selon la revendication 5, **caractérisé en ce qu'**au moins une partie en ailette (51 ; 52a ; 51b) est de forme fermée et enserre une chambre arrière (66 ; 66b ; 66c ; 66d).

8. Amortisseur selon la revendication 5, **caractérisé en ce qu'**au moins une partie en ailette (51c ; 52d) est réalisée en deux pièces, formant ainsi une fente (72 ; 72d).

9. Amortisseur selon l'une des revendications 1 à 5, **caractérisé en ce qu'**un dos de guidage (69) est disposé entre éléments d'amortissement (50b ; 50c) voisins.

10. Amortisseur selon la revendication 1, **caractérisé en ce que** l'unité de guidage/d'amortissement (41a ; 41d) est disposée à l'extrémité de poussoir vers l'intérieur du carter (23a ; 23d) du poussoir (17a).

11. Amortisseur selon la revendication 1, **caractérisé en ce que** l'unité de guidage/d'amortissement (41 ; 41b ; 41c) est disposée au niveau de l'extrémité du carter côté poussoir (24) et est raccordée au carter (8).
